Europäisches Patentamt

European Patent Office

Office européen des brevets

(11) Publication number: **0 414 353 A2**

# EUROPEAN PATENT APPLICATION

(21) Application number: **90306958.1**

(22) Date of filing: **26.06.90**

(51) Int. Cl.5: **C09J 133/06, C08F 8/00, C09J 7/02, //(C09J133/06, 193:04,171:02)**

The title of the invention has been amended (Guidelines for Examination in the EPO, A-III, 7.3).

(30) Priority: **26.06.89 US 370970**

(43) Date of publication of application:
**27.02.91 Bulletin 91/09**

(84) Designated Contracting States:
**BE DE FR GB IT NL**

(71) Applicant: **THE KENDALL COMPANY**
**One Federal Street**
**Boston Massachusetts 02110-2003(US)**

(72) Inventor: **Hanninen, Robert**
**640 Townsend Road**
**Groton, Massachusetts, 01450(US)**
Inventor: **Takemoto, Shiro George**
**310 Sanderson Avenue**
**Dedham, Massachusetts, 02026(US)**
Inventor: **Richards, Mildred C.**
**32 West Park Drive**
**Wakefield, Massachusetts, 01880(US)**

(74) Representative: **Kearney, Kevin David Nicholas et al**
**KILBURN & STRODE 30 John Street**
**London, WC1N 2DD(GB)**

(54) Adhesive and repulpable tape coated therewith.

(57) An adhesive composition for application to a repulpable tape is disclosed which retains adhesion and tack over a wide range of humidity and temperature. The adhesive composition involves the addition of 10 to 50 parts by weight of a partially to fully hydrogenated rosin and at least 1 part by weight of polyethylene glycol.

EP 0 414 353 A2

## REPULPABLE TAPE

This invention relates in general to pressure-sensitive adhesives and in particular to repulpable tapes which retain adhesion and tack over a wide range of humidity and temperature.

Since the need for repulpable tape is widely recognised in our waste conscious, efficiency conscious and natural resource preservation conscious society, efforts have been made to produce such a product. Illustrative of such attempts are U.S. Patent No. 4,569,960; 4,413080 and 3,865,770 all issued to Blake; U.S. Patent No. 4,442,258 issued to Sunakawa; and U.S. Patent No. 4,482,675 issued to Witt.

While the aforementioned tapes are all successfully water-dispersible they vary in repulpability, tack and shear strength (also referred to as creep) and all three properties are not optimally met over a wide range of relative humidity. Shear strength and relative humidity stability are advantageous properties given the commercial application of repulpable tapes, namely the paper industry.

Any industry which uses or makes rolls of paper, requires a continuous operation and consequently requires tape which allows for the uninterrupted feeding of one roll of paper to another.

These properties are particularly advantageous in the paper making and printing facilities wherein repulpable splicing tape is necessitated to connect the beginning of one roll to the end of another to assure continuity or to reconnect cut-out defective segments.

Continuity is further advanced by the repulpable property of such tapes in that the repulpability eliminates separating the tape from the paper waste. Moreover, since the tape is recyclable it is also ecologically advantageous because the tape can be thrown in with the paper waste. However, the largest promoter of continuity is adhesion.

The physical conditions that exist in the paper manufacturing facilities are variable ranging from hot to cold temperature and low to high relative humidity given the amount, length or speed of production. Thus, it is highly desirable for an efficient and continuous operation to have tapes that are stable i.e., maintain adhesion over a wide range of physical extremes such as low and high relative humidity. Although the prior art teaches water-dispersibility it does not teach how to achieve repulpability, tack and creep simultaneously over a wide range of relative humidity. These shortcomings are evident in the aforementioned illustrative patents, which will now be described in detail.

U.S. Patent No. 3,441,430 issued to Peterson describes repulpable splicing tapes which adhere to wet or hydrophilic surfaces which are made by coating one or both surfaces of a paper backing with a water-soluble copolymer of an acrylic acid and an ether acrylate, plasticised with at least an equal amount of a liquid water-soluble plasticiser having at least one ether linkage, e.g. polyethylene glycol monophenyl ether. Due to the ether linkage and resultant oxidation sensitivity it loses significant tackiness, flexibility, and repulpability when exposed to high temperature and humidity.

U.S. Patent No. 3,865,770 issued to Blake describes water-soluble acrylate vinyl carboxylic acid copolymers partially neutralised with alkanolamines.

U.S. Patent No. 4,413,080 also issued to Blake describes a water-dispersible pressure-sensitive adhesive wherein certain acrylate:acrylic acid copolymers are blended with acidic rosin or rosin derivative, partially neutralised with KOH in combination with NaOH and/or LiOH, and plasticised with an oily water-soluble polyoxyethylene compound.

U.S. Patent No. 4,569,960 issued to Blake describes a blend of acrylate:acrylic acid copolymer, NaOH and/or LiOH, KOH, and certain ethoxylated plasticising components. This patent discusses the previous U.S. Patent No. 4,413,080 issued to Blake in that it describes the disadvantages of the previous patent as follows: "upon exposure to elevated temperatures, the plasticiser may separate and migrate into layers of paper adjacent the splice, causing transparentisation and decreased adhesion" (see column 2, lines 25 to 29). Notably, U.S. Patent Nos. 4,413,080 and 4,569,960 primarily address splicing carbonless paper without adversely affecting its performance, whereas U.S. Patent No. 3,865,770 addresses splicing tapes in general.

As a summary, while the tapes described in the aforementioned Blake patents maintain tack in a low humidity environment i.e. below 20%, they lose significant tack in a high humidity environment i.e. above 85%.

U.S. Patent No. 4,442,258 issued to Sunakawa et al describes a "polymerisation product obtained by the solution polymerisation of a water-soluble ethylenically unsaturated monomer, alone or in combination with a water-soluble ethylenically unsaturated monomer copolymerisable with the water-soluble ethylenically unsaturated monomer, in the presence of a plasticiser selected from the group consisting of polyetherpolyols and polyhydric alcohols having a molecular weight of less than 3,000 and which is liquid at room temperature" (see column 2, lines 55 to 64). While this product is repulpable and maintains good tack over a broad range of humidity, it gives variable creep at 150°F (66°C) (2-100 hr.) and at 70°F (25°C) (approximately 8 hrs).

Lastly, U.S. Patent No. 4,482,675 issued to Witt describes a composition comprising acrylate based polymer systems containing carboxylic functionality which are at least partially esterified with an ethoxylate of alkyl phenol or aliphatic alcohol and then at least partially neutralised with alkaline material. While the Witt paper splicing tape is water-soluble and repulpable, its adhesive properties are water dependent. Hence, as the percentage of moisture increases, the tack increases. Consequently, under low moisture environmental conditions, misting is required.

The present invention seeks to provide an adhesive that may be able to maintain repulpability, advantageously alleviating the need for misting while simultaneously improving tack and shear strength, i.e. adhesion.

The present invention provides for a water dispersible pressure sensitive adhesive that may have all the advantages of U.S. patent 4,482,675, including repulpability, and may have additional advantages of improved tack and shear strength over a wide range of relative humidity and temperature by modifying the adhesive composition described and claimed therein.

Thus a first aspect of the present invention relates to a water-soluble, pressure-sensitive adhesive composition that may be suitable for preparing repulpable pressure-sensitive adhesive tapes, the composition comprising:

(a) (preferably 49 to 89 parts by weight of) a neutralised (and particularly an alkali metal salt) product preparable by the reaction of a $C_6$-$C_{18}$ alkyl phenol and/or $C_6$-$C_{18}$ alkanol containing from 4 to 30 moles combined ethylene oxide with a copolymer obtainable by the polymerisation of a monomer composition comprising by weight:

from 35 to 85% of acrylate monomer of the formula $CH_2 = C(R)\text{-}COOR^1$ wherein R represents a hydrogen atom or a $C_1$-$C_4$ alkyl group, and $R^1$ represents a $C_1$-$C_{14}$ alkyl group;

from 8 to 30% of an alpha,beta-ethylenically unsaturated di-carboxylic acid anhydride; and

from 8 to 30% of monomer which is a vinyl ester (hydrolysed or unhydrolysed), vinyl ether, vinyl halide, styrene, $C_1$-$C_4$ alkyl styrene, lower ($C_1$ to $C_6$) alkyl methacrylate or an alpha-olefin or a mixture thereof;

the weight ratio of acrylate to anhydride being from 1.5:1 to 8:1, the amount of the alkyl phenol and/or alkanol being sufficient to provide an alkyl phenol and/or alkanol:anhydride molar ratio of from 0.3 to 1.0 and at least about 0.7 when the acrylate:anhydride weight ratio is below about 4;

(b) (preferably from 10 to 50 parts by weight of) a partially to fully hydrogenated rosin; and

(c) (preferably the balance, such as at least 1 part by weight) polyethylene glycol.

This adhesive composition may be capable of retaining its adhesion properties over a wide range of humidity and temperature.

The adhesive composition of the present invention may be thought of as composition disclosed in US 4482675 which includes further a partially to fully hydrogenated rosin and an effective amount of polyethylene glycol.

The hydrogenated rosins which may be utilised in the practice of this invention are well known in the art. Suitable rosins include the class known as wood rosins, which generally have a degree of hydrogenation from 1- 100%. Such wood rosins in general, preferably are or contain abietic acid (and isomers and derivatives thereof). As examples of illustrative rosins of this description mention may be made of "Staybelite" and "Foral AX" (both trade marks of Hercules Chemical Company).

Preferred polyethylene glycols are those having a molecular weight of at least 200, to reduce volatility. Preferably the polyethylene glycol is a liquid. Such polyethylene glycols are commercially available, for example, from Union Carbide under the trade mark "Carbowax".

It has been found that both esterification and neutralisation of the base polymer, such as acrylate/acetate/anhydride, are advantageously in order to provide an effective polymeric adhesive. Thus, the neutralised but non-esterified base polymer, although water-soluble, may possess no creep (shear adhesion), tack, or the desired adhesive properties. Conversely, the esterified by non-neutralised base polymer may not be water-soluble nor may it be dispersible, and may totally lack in cohesive strength within the limits tested. Moreover, probe tack may be virtually non-existent unless inordinately high molar ratios of nonionic-anhydride are used.

Esterification with the nonionic materials (such as the alkyl phenol and alkanol) described may increase the adhesion and tack of the base polymer, this being attributable, most probably, to the plasticising effect of the polyethoxyl moiety present in the nonionic material. Thus in its broadest terms any suitable hydroxy compound may be used having from 4 to 30 moles of ethylene oxide. However, excessive amounts of the nonionic compound may tend to impair cohesive strength; thus with reference to a base polymer of butyl acrylate-vinyl acetate-maleic anhydride (such as 78-10-12 on a parts by weight basis) optimum properties regarding tack, adhesion and cohesive strength may be obtained with the use of about 60 php (parts per hundred parts of polymer) of nonionic compound. A preferred nonionic material is the alkyl phenol, such as a $C_{7-11}$ or $C_{8-10}$ alkyl phenol. This may suitably have from 6 - 15, such as from 8 - 10, moles of ethylene oxide. In the case of Igepal CO-630, a preferred esterifying agent comprises the reaction product of nonylphenol with 9 moles ethylene oxide; this preferably corresponds to a molar ratio of nonionic to the maleic anhydride included in the base polymer may be about 0.79. Should the neutralisation step be omitted, it has been found that increasing the degree of esterification may decrease the cohesive strength.

Neutralisation of the esterified base polymer with alkali will usually improve the cohesive strength, water solubility, adhesion and tack of the polymer. Thus, for the preferred 78/10/12 butyl acrylate/vinyl acetate/maleic anhydride base polymer, also referred to as BuA/VA/MAH, complete water solubility thereof may be obtained when treated with 40 to 60 php of the CO-630 nonionic and neutralising to a degree greater that 0.75. With 30 php of the same nonionic, the esterified polymer may be water-dispersible at complete neutralisation. Thus, one can suggest that polymer solubility is apparently a function of both the ethoxyl concentration and ionised carboxyl functionality. When fully neutralised with NaOH, or other alkali metal hydroxides, all polymeric adhesives in accordance with the invention may pass the repulpability test.

Cohesive strength of the present adhesive compositions, as evaluated by 150°F (66°C) creep measurements (applied stress of 500 g/in$^2$), is found to increase with increased degree of neutralisation.

The acrylate monomers useful herein for preparing the (base) copolymer have the general formula

$$CH_2{=}\overset{\displaystyle R}{\overset{\displaystyle |}{C}}{-}COOR^1$$

wherein R represents a hydrogen atom or a $C_1$-$C_4$ alkyl group and $R^1$ represents an alkyl group of from 1 to 14 (and preferably 2 to 6) carbon atoms. Suitably one of R or $R^1$ represents a $C_4$ alkyl group, preferably $R^1$. Where more than one acrylate monomer is employed it is preferred that at least 60% of the monomers have R or (preferably) $R^1$ representing a $C_4$ alkyl group. Examples of acrylate monomers include methylacrylate, 2-ethylhexylacrylate (ZEMA) and, most preferably, butyl acrylate (BuA). Methyl methacrylate (MMA), though normally considered to be a high Tg type of monomer capable of increasing the modulus and thus cohesive strength of the product, copolymer is not as effective as the vinyl acetate, hydrolysed or unhydrolysed (VA). USe of MMA is preferably in addition to, rather that in lieu of, BuA. When compared to the BuA-containing base polymer, the 2EHA system may exhibit lower cohesive strength as indicated by the 150°F (66°C), creep (shear) test as well as lower adhesion-tack values.

The acrylate monomer preferably comprises from 35 to 85 by weight of the monomer mixture and in forming the base polymer product with a range of from 40 to 80% being preferred. Generally, as the proportion of the acrylate is increased, the amount of nonionic required for esterification, expressed as a molar ratio on the basis of anhydride, is decreased, as is demonstrated in the Witt examples. The weight ratio of acrylate monomer to anhydride comonomer may be from 1.5:1 to 8:1, and preferably 4:1 to 7:1. In the most preferred embodiments, such ratio is about 6.5:1.

Alpha-beta-ethylenically unsaturated di-carboxylic anhydride monomers useful herein for preparing the base copolymer include maleic, citraconic and itaconic anhydrides with maleic anhydride (MAH) comprising the preferred species. The anhydride suitably constitutes from about 8 to 30%, and preferably 8 to 2-%, by weight of the monomer composition. As will be demonstrated in the examples, decreasing the anhydride proportion may provide a more favourably characterised copolymer product.

The remaining component of the (co)monomer composition is a vinyl ester, (e.g. vinyl acetate, vinyl propionate, vinyl butyrate, etc); styrene, an alkyl (e.g. $C_{1-6}$) alkyl) styrene (such as alpha-methyl styrene; lower (e.g. $C_{1-6}$) alkyl methacrylates, (e.g., methyl methacrylate); vinyl halide, (e.g., vinyl chloride); vinyl (alkyl, e.g. $C_1$ to $C_4$) ether, (e.g., vinyl methyl ether, vinyl ethyl ether, etc.) and/or an (e.g. $C_{1-4}$) alpha-olefin, (e.g. ethylene and propylene). Preferred monomers include vinyl acetate, styrene and MMA, with vinyl acetate being particularly preferred (especially hydrolysed vinyl acetate). This monomer component suitably constitutes from 8 to 30%, and preferably about 10-25%, by weight of the comonomer mixture. In particularly preferred compositions, e.g., including vinyl acetate, such monomer comprises from 9-12%, e.g. about 10%, of the monomer mixture.

The base polymer as made available for esterification with nonionic suitably has a viscosity of from 500 to 1500, and preferably 800 to 1200, cps as measured on a Brookfield viscometer model RVT spindle no4@50 rpm. (about 50% polymer solution in ethyl acetate/toluene (80-25) at 23°C). Polymerisation, as

4

previously described, generally proceeds to at least about 93% conversion. Specific examples of base interpolymers useful herein include the following:

BuA/VA/MAH (78-10-12)
BuA/VA/MAH (70-10-20)
BuA/VA/MAH (65-15-20)
BuA/VA/MAH (65-25-10)
BuA/VA/MAH (60-10-30)
BuA/VA/MAH (45-25-30)
BuA/Sty/MAH (78-10-12)
BuA/MMA/MAH (78-10-12)
2EHA/VA/MAH (78-10-12)

Thus a particularly preferred copolymer is preparable from a composition which comprises:

i) from 50 to 80%, optimally from 75 to 79% by weight of butyl acrylate;

ii) from 10 to 20%, optimally from 10 to 14%, of maleic anhydride; and

iii) from 10 to 25%, optimally from 10 to 15%, vinyl acrylate.

Nonionic materials useful herein for esterification of the base polymer generally comprise a $C_6$-$C_{18}$ and preferably $C_8$ to C 8 alkyl phenol or $C_8$-$C_{18}$ alkanol containing from 4 to 50 and preferably from 6 to 30 moles combined ethylene oxide. Specific materials include (without being limited to these) Igepal CO-630, comprising nonyl phenol condensed with about 9.5 moles ethylene oxide and commercially supplied by GAF; Igepal CO-530 comprising nonyl phenol condensed with 6 moles ethylene oxide; Igepal CO-430 comprising nonyl phenol condensed with 4 moles ethylene oxide; Igepal CO-880 comprising nonyl phenol condensed with 30 moles ethylene oxide; Tergitol 15-S-5 supplied by Union Carbide comprising linear $C_{11}$-$C_{15}$ alcohol condensed with 5 moles ethylene oxide and Triton X-45 supplied by Rohm & Haas comprising octyl phenol condensed with 5 moles ethylene oxide. Esterification may generally be effected at elevated temperature, e.g., 650-85° C, by adding the nonionic to the reaction medium containing the pre-formed polymer as previously described. The amount of nonionic used is from 30 to 80 and preferably 50 to 70 php corresponding to a molar ratio expressed on the basis of anhydride in the base polymer of from 0. 3 to 1. 0 and at least about 0. 7 when the acrylate:anhydride weight ratio in the polymer is below about 4.

The post esterified base polymer may thereafter be neutralised with an alkali to provide a degree of neutralisation of from 0.5 to 1.0. The use of organic amines such as dimethyl and trimethyl amine may provide a water-insoluble product which fails the repulpability test and has little or no cohesive strength. These results are obtained despite stoichiometric neutralisation of the esterified polymer. Preferred are alkali metal hydroxides and carbonates. Although in certain embodiments an adhesive polymer product may be obtained having severely reduced cohesive strength, such materials are nevertheless useful in a variety of applications, since they are water-soluble or dispersible and possess satisfactory adhesion-tack properties. According to particularly preferred embodiments, e.g., esterification of a BuA/VA/MAH base polymer with the Igepal CO-630 nonionic material in amounts providing a molar ratio on the basis of MAH of about 0.67 followed by stoichiometric neutralisation with NaOH, the adhesion, tack and cohesive properties are optimised in the water-soluble adhesive products.

The neutralised product may then be agitated and preferably 10-50 parts by weight of a partially to fully hydrogenated rosin to 100 parts by weight of polymer can be added. Lastly, at least one part by weight of polyethylene glycol (the balance) is suitably added to the resultant mixture.

A second aspect of the present invention relates to a substrate at least partially coated (such as a layer) with an adhesive composition of the first aspect. The substrate will preferably be flexible, such as a tape, and suitably also repulpable.

According to a third aspect of the present invention there is provided a process for the preparation of a pressure-sensitive adhesive composition, the process comprising:

a) polymerising a monomer composition comprising (with preferred percentages by weight):

i) (preferably from 35 to 85% of) acrylate monomer of the formula $CH_2 = C(R)\text{-}COOR^1$ wherein R represents a hydrogen atom or a $C_{1-4}$ alkyl group, and $R^1$ represents a hydrogen atom or a $C_{1-4}$ alkyl group;

ii) (preferably from 8 to 30% of) an alpha, beta-ethylenically unsaturated di-carboxylic acid anhydride; and

iii) (preferably from 8 to 30% of) a monomer which is a vinyl ester, vinyl ether, vinyl halide, styrene, a $C_{1-4}$ alkyl styrene, a $C_{1-6}$ alkyl methacrylate or an alpha-olefin, or a mixture thereof;

the weight ratio of acrylate to anhydride being from 1.5:1 to 8:1, the amount of the alkyl phenol and/or alkanol being sufficient to provide an alkyl phenol and/or alkanol:anhydride molar ratio of from 0.3 to 1.0 and at least about 0.7 when the acrylate:anhydride weight ratio is below about 4;

b) esterifying the resultant polymer with a $C_{6-18}$ alkyl phenol and/or $C_{6-18}$ alkanol containing from 4 to 30 moles of ethylene oxide;

c) neutralising the esterified polymer with an alkali;

d) adding (preferably 10 to 50 parts by weight of) a partially to fully hydrogenated rosin to (preferably 49 to 89, or about 100 parts by weight of) the neutralised polymer; and

e) adding (preferably at least one part by weight, or the balance of) polyethylene glycol.

Preferably the polymerisation is conducted in the presence of a catalyst, such as azobisisobutyronitrile, and suitably also a solvent, e.g. an ester such as ethyl acetate. This is suitably at a temperature of from 65 to 85° C, and may be preferably under an inert (e.g. $N_2$) atmosphere.

Esterification is preferably conducted at a temperature of from 65 to 85° C.

Neutralisation is suitably with a hydroxide, such as an alkali metal hydroxide (e.g. NaOH). The neutralised polymer may then be suitably heated, for example by reflux, at 60-100° C (e.g. 70-90° C), which may preferably be from 1 - 2 hours.

Thus the present invention can be thought of as providing a preferred process for the preparation of an adhesive composition, the process comprising contacting the monomer(s) in bulk or as a solution of the monomer composition, suitably with an effective amount of polymerisation catalyst such as at a temperature of from 65° to 85° C, for a time sufficient to enable at least substantial conversion of monomer to polymer; thereafter contacting the polymer with a sufficient amount of the described alkanol or alkyl phenol esterifying agent to provide an alkyl phenol or alkanol:anhydride molar ratio of from 0.3 to 0.8 and at least about 0.7 when the acrylate:anhydride weight ratio is below about 4, e.g. from 65° to 85° C, temperature being maintained throughout the esterification reaction;

and thereafter neutralising the esterified polymer with an alkaline material such as at a temperature from 0° C to 100° C, preferably 15° C to 40° C, and more preferably at from 20° C to 30° C, optimally at about 25° C, to suitably provide a degree of neutralisation from 0.5 to 1.0 and sufficient to provide a water-soluble polymer product;

adding (e.g. 10-50 parts by weight of) a partially to fully hydrogenated rosin to (e.g. 100 parts by weight of) the resulting polymer;

and thereafter adding at least 1 part by weight of polyethylene glycol.

The invention may thus be thought of as encompassing a process for making the adhesive composition of the first aspect, the process comprising:

(1) polymerising the monomer composition to form a polymer;

(2) esterifying the resultant polymer with a sufficient amount of alkanol or alkyl phenol;

(3) neutralising the esterified polymer with an alkaline material;

(4) adding 10-50 parts by weight of a partially to fully hydrogenated rosin to 100 parts by weight of the resultant neutralised polymer; and thereafter;

(5) adding at least 1 part by weight of polyethylene glycol.

In a particularly preferred embodiment, the contacting monomer and catalyst is effected incrementally by dividing the catalyst into separate solution portions, e.g., a first catalyst solution comprising 70-80% of the total weight of catalyst solution to be charged and a second, more concentrated, catalyst solution. When so proceeding, from 30 to 60% of the total monomer to be charged is initially contacted with from 30 to 60% of the first catalyst solution in the reaction medium. The remaining monomer and balance of the first catalyst solution are later added simultaneously, followed by addition of the entire quantity of the second catalyst solution, all additions being made according to a predetermined time sequence.

A fourth aspect of the present invention relates to the preparation of a repulpable tape, the process comprising coating at least a part of a substrate (e.g. a tape, such as repulpable tape) with an adhesive composition of the first aspect.

It should be understood that preferred features and characteristics of one aspect of the present invention are as for another aspect mutatis mutandis .

The following Examples are provided by way of illustration and are not to be considered as being limiting on the present invention.


## Example 1


The base copolymers in the following Examples are prepared as follows, specific reference being now made to the BuA/VA/MAH polymer species. Monomer and catalyst solution having the following composition are provided:

6

| Monomer Solution | Parts | Catalyst Solutions 1,2, & 3 | Parts | Reactor Solution | Parts |
|---|---|---|---|---|---|
| BuA | 78 | Catalyst 1 | | Ethyl Acetate | 52.1 |
| VA | 10 | Ethyl Acetate | 9.95 | AIBN* | |
| MAH | 12 | AIBN* | 0.15 | | |
| Ethyl Acetate | 28.7 | Catalyst 2 | | | |
| | | Ethyl Acetate | 9.20 | | |
| | | AIBN* | 0.35 | | |
| | | Catalyst 3 | | | |
| | | Ethyl Acetate | 4.97 | | |
| | | AIBN* | 0.30 | | |

* Azobisisobutyronitrile

Polymerisation

A reaction mixer is charged with 6.55 kg (14.4 lbs) of ethyl acetate, sparged with nitrogen and heated to 60-63° C (140-145° F). A monomer mix consisting of 3.5 kg (7.72 lbs) of ethyl acetate (urethane grade), 1.22 kg (2.69 lbs) of vinyl acetate, 9.55 kg (21.01 lbs) of butyl acrylate and 1.47 kg (3.23 lbs) of maleic anhydride was prepared. 30% of this monomer mix was added to the reactor while maintaining the temperature at 60-63° C (140-145° F). A catalyst solution of 18.2 grams of AIBN in 1.22 kg (2.68 lbs) of ethyl acetate was then added and the resulting exotherm was controlled by cooling to maintain the temperature at 81-81° C (178-180° F) for about one hour. After this initial hold period, the remaining (70%) monomer mix and additional catalyst (42.8 grams of AIBN in 1.13 kg (2.48 lbs) of ethyl acetate) were fed concurrently over a 60-90 minute period while maintaining a gentle reflux at 82-83° C (180-182° F). The resultant mix was held at 82° C (180° F) for one hour. Thereafter, chaser catalyst solution consisting of 36.8 grams (0.081 lb) of AIBN an 0.61 kg (1.34 lbs) of ethyl acetate was added followed by a second one hour hold period at 82° C (180° F) followed by a cooling period.

The polymerisation is found to proceed to 94.1% conversion by the end of the 1.5 hour hold period. Continued heating in the absence of the polyethoxylated alcohol for an additional 3 hours results in a conversion of essentially 100%. The Brookfield viscosity model RVT spindle no. 4@50 rpm is determined to be 920 cps.

Esterification and Neutralisation

94.432 grams of potassium acetate and 7.4 kg (16.28 lbs) of Igepal CO-630 were added to the aforementioned mix and the resultant mixture was heated to 80-82° C (176-180° F) for a two-hour period. The mixture was then cooled to 71° C (160° F). Esterification of the polymer product is effected with Igepal CO-630 at a concentration range of up to 60 php corresponding to an Igepal/MAH molar ratio range of up to about 1.0. A solution of ethyl acetate toluene was then added. The resultant mixture was stirred for five minutes and a 50% sodium hydroxide solution was then added, thereby neutralising the partially esterified polymer. The mixture was then heated to reflux 80° C (176° F) for 1.5 hours and thereafter cooled to 38° C (100° F) or less. To the resultant polymer solution was then added 20.9 kg (46.1 lbs) of hydrogenated rosin and 8.05 kg (17.7 lbs) of polyethylene glycol and the resultant mixture was stirred until homogeneity was achieved.

Example 2

Double-Faced Tape

7

The adhesive formulation prepared in Example 1 was coated onto a conventional release sheet and dried to provide a layer 1.8 mils thick. A tissue paper was then applied over the adhesive surfaces after which a second layer of adhesive approx. 1.8 mils thick was coated on the tissue paper surface to form the double-faced tape which, when used, is separated from the release sheet. Alternatively the second adhesive layer may be transfer coated by contacting the tissue with adhesive on a release sheet.

The tape prepared above was subjected to loop tack and shear force testing of its adhesive properties in accordance with the following test methods.

In the loop tack test method Hammerhill xerographic paper is affixed to a horizontal plate using double faced tape, and the excess trimmed off, taking care not to touch the surface of the paper. Another piece of the same paper should be used to press down the substrate smoothly onto the horizontal plate.

An Instron tester is set so as to afford a 15.3 cm (6 inch) gauge length between the horizontal plate's paper surface and the lower edge of the Instron upper jaw. The Instron front panel is set such that the jaw can be lowered to bring the tape loop into full contact with the 5.1 cm (2 inch) wide horizontal test panel. This lower extension during testing is approximately 10.2 cm (4 inches) giving a 5.1 cm (2 inch) gauge length. The jaw is then raised to remove the tape. Both lowering onto and removal from the test panel is accomplished at 30.5 cm (12 inches) per minute.

A 30.5 cm (12 inch) long strip of tape is formed into a loop, with the adhesive side facing out. The two ends are placed into the Instron upper jaw so that 1.91 cm (3/4 inch) of the test specimen ends are within the jaw's grip. The loop is now hanging down so that upon lowering the Instron upper jaw, the tap loop will come in contact with the prepared 5.1 cm (2 inch) wide horizontal plate. This will cause an area of 5.1 cm (2 inches) by the tape's 2.5 cm (1 inch) width to be completely covered by the bottom of the loop.

After lowering the loop onto the prepared surface at 30.5 cm (12 inches) per minute, the tape is then pulled away from the substrate at 30.5 cm (12 inches) per minute. The work to remove the tape is electronically or manually read from the machine or chart.

The High Temperature Shear Adhesion method used to obtain the following data is a modification of the standard Pressure Sensitive Tape Council No. 7 Test Method, in that the contact area to a stainless steel panel is 2.5 x 5.1 cm (1 x 2 inches) with a mass of 1kg, all other criteria being the same. The apparatus is set to maintain $66 + 2 °$ C. Samples were tested by immediately applying the mass to the tape as the panels were placed in the apparatus.

Table I shows the test results when subjecting the samples to the aforementioned tests.

Table I

| Coating Method 2nd Side | Ave Loop Tack oz-in | | 150° F(66° C) Shear Time in Hrs. | |
|---|---|---|---|---|
| | Side 1 | Side 2 | Side 1 | Side 2 |
| Direct Transfer | 15.7 40.8 | 18.2 20.3 | 100+ 100+ | 100+ 100+ |

The tape prepared above was also subjected to testing of Loop Tack to paper at different moisture contents. As will be apparent from the results shown in Table II, tackiness is not dependent upon moisture content.

8

Table II

| (300° F (159° C), 3 min) | |
|---|---|
| % Moisture | Ave Loop Tack To Paper (in-oz) |
| 1.46 | 35.9 |
| 3.96 | 41.8 |

To confirm this observation the two-faced tape of this invention, as prepared in Example 1 (TEST), was compared with four similar tapes of varying moisture contents prepared in accordance with the aforementioned Witt patent. These results are shown in Table III.

Table III

| Sample | % Moisture | Polyken Probe Tack (g) | 150° F(66° C) Shear Force (hr.) |
|---|---|---|---|
| A (Control) | 8 | 325 | 0.2 |
| B (Control) | 6.5 | 150 | 0.2 |
| C (Control) | 6 | 100 | 0.2 |
| D (Control) | 5 | 20 | Not Tested |
| F (TEST) | 4.1 | 576 | 100 + |

As seen from Table II, the probe tack of the control tapes of the prior art decrease materially as the moisture content decreases. For example, a percentage decrease from 8 to 5 percent results in a probe tack decrease from 325 to 20. Notably, Polyken Probe Tack is a patented test method fully described in expired U.S. Patent No. 3,214,971.

Example 3

Single-Faced Tape

A single-faced tape was prepared by reverse roll coating an adhesive as prepared in Example 1 onto a silicone-coated paper.

The tape prepared above demonstrated further improvement over the prior art, namely adhesion stability, as measured by loop tack, over broad humidity ranges as evidenced by Table IV.

Table IV

| Temp. | Rel. Humidity | Exposure Time | Loop Tack |
|---|---|---|---|
| °F | (percent) | (min.) | (in-oz) |
| 54-57 (12-14°C) | 23-25 | 5 | 23.1 |
| | | 10 | 30.6 |
| | | 20 | 27.8 |
| | | 30 | 30.2 |
| 71-72 (21-22°C) | 46-53 | 5 | 32.0 |
| | | 10 | 28.5 |
| | | 20 | 30.0 |
| | | 30 | 31.7 |
| 84-87 (29-31°C) | 81-100 | 5 | 12.7 |
| | | 10 | 14.1 |
| | | 20 | 13.2 |
| | | 30 | 14.5 |

This sample was further subjected to a shear strength and repulpability test yielding the following results:

150°F (66°C) Shear Test - 100+ Hr.

Repulpability Test - Pass

Samples were evaluated for repulpability and water solubility by first pigmenting the base polymer solution with dye and then forming a single faced tape in accordance with Example 3.

Repulpability is determined by adhering a 1x11-inch (27.9 cm) strip of the tape product onto a 8 1/2x11-inch (21.6cmx27.9cm) sheet of Hammermill "Fore Xeroxcopy" paper. This sheet along with two other sheets are then cut into 1-inch square (2.5cmx2.5cm) pieces. Thus, the tape product is dispersed with approximately 13 gms of paper stock. The paper is added to a "Waring Blender" containing 600 mls of room temperature water. The blender is then run at "liquefy" speed for 20 seconds, rinsed down with water, and re-run for two additional 20 seconds.

Approximately 170 mls of the resulting pulp dispersion is then diluted to 250 mls with water and vacuum filtered, using a large Buchner funnel, fitted with a fine mesh screen. The resulting paper "cake" is then compressed and examined for any coloration. The absence of colour is taken as evidence of repulpability.

Water solubility is determined by placing a tape strip into water and observing the resulting solution. In most instances, repulpability and water solubility results are found to be equivalent. Only when the polymer is water dispersible would there be a discrepancy between the two tests, i.e., the tape can be repulpable yet the adhesive not completely water soluble.

Lastly, to demonstrate still a further improvement over the prior art, namely versatility and hence utility on different surfaces, a loop tack test was performed adhering the tape to a newsprint surface. Table V illustrates the positive results.

Table V

| Loop Tack To Newsprint Surface at 50% R.H. | | |
|---|---|---|
| Exposure (min) | Example | Commercially Available Modified Acrylate |
| | in-oz | in-oz |
| 1 | 23.4 | 12.5 |
| 5 | 25.1 | 13.7 |
| 10 | 24.3 | 12.3 |
| 15 | 25.7 | 11.8 |
| 20 | 29.4 | 10.3 |
| 30 | 23.3 | 10.9 |

Thus the repulpable tape of this invention may display excellent loop tack and shear resistance over a broad range of relative humidity and temperature, as well as versatility of adhesion to different surfaces.

**Claims**

1. A pressure-sensitive adhesive composition comprising:
(a) a neutralised product preparable by the reaction of a $C_6$-$C_{18}$ alkyl phenol and/or $C_6$-$C_{18}$ alkanol containing from 4 to 50 moles combined ethylene oxide with a copolymer obtainable by the polymerisation of a monomer composition comprising by weight:
i) from 35 to 85% of acrylate monomer of the general formula
$CH_2 = C(R)\text{-}COOR^1$
wherein R represents a hydrogen atom or a $C_1$-$C_4$ alkyl group, and $R^1$ represents a $C_1$-$C_{14}$ alkyl group;
ii) from 8 to 30% of an alpha,beta-ethylenically unsaturated di-carboxylic acid anhydride; and
iii) from 8 to 30% of a monomer which is a vinyl ester, vinyl ether, vinyl halide, styrene, $C_1$-$C_4$ alkyl styrene, lower ($C_1$ to $C_6$) alkyl methacrylate or alpha-olefins or a mixture thereof;
the weight ratio of acrylate to anhydride being from 1.5:1 to 8:1, the amount of the alkyl phenol and/or alkanol being sufficient to provide an alkyl phenol and/or alkanol:anhydride molar ratio of from 0.3 to 1.0 and at least about 0.7 when the acrylate:anhydride weight ratio is below about 4;
b) a partially to fully hydrogenated rosin; and
c) polyethylene glycol.
2. A composition as claimed in claim 1, wherein the acrylate monomer is butyl acrylate.
3. A composition as claimed in claim 1 or 2, wherein the anhydride is maleic anhydride.
4. A composition as claimed in any of claims 1 to 3, wherein the monomer is vinyl acetate.
5. A composition as claimed in any of claims 1 to 4, wherein the rosin is abietic acid.
6. A substrate at least partially coated with an adhesive composition as claimed in any of claims 1 to 5.
7. A substrate as claimed in claim 6 which is a repulpable tape.
8. A process for the preparation of a repulpable tape, the process comprising coating at least a part of a substrate with a composition as claimed in any of claims 1 to 6.
9. A process for the preparation of a pressure-sensitive adhesive composition, the process comprising:
a) polymerising a monomer composition comprising:
i) from 35 to 85% of acrylate monomer of the formula
$CH_2 = C(R)\text{-}COOR^1$
wherein R represents a hydrogen atom or a $C_{1-4}$ alkyl group, and $R^1$ represents a hydrogen atom or a $C_{1-4}$ alkyl group;
ii) from 8 to 30% of an alpha,beta-ethylenically unsaturated di-carboxylic acid anhydride; and
iii) from 8 to 30% of a monomer which is a vinyl ester, vinyl ether, vinyl halide, styrene, a $C_{1-4}$ alkyl styrene, a $C_{1-6}$ alkyl methacrylate or an alpha-olefin, or a mixture thereof;
the weight ratio of acrylate to anhydride being from 1.5:1 to 8:1, the amount of the alkyl phenol and/or alkanol being sufficient to provide an alkyl phenol and/or alkanol:anhydride molar ratio of from 0.3 to 1.0 and at least about 0.7 when the acrylate:anhydride weight ratio is below about 4;
b) esterifying the resultant polymer with a $C_{6-18}$ alkyl phenol and/or $C_{6-18}$ alkanol containing from 4 to 30 moles of ethylene oxide;

c) neutralising the esterified polymer with an alkali;

d) adding a partially to fully hydrogenated rosin to the neutralised polymer; and

e) adding polyethylene glycol.

10. A process as claimed in claim 9, wherein polymerisation is promoted by adding a catalyst solution of azobis-isobutyronitrile and ethyl acetate.